# EUROPÄISCHE PATENTSCHRIFT

(11) **EP 0 749 887 B1**
(45) Veröffentlichungstag und Bekanntmachung des Hinweises auf die Patenterteilung: **26.09.2001**
(21) Anmeldenummer: 96106399.7
(22) Anmeldetag: 24.04.1996
(51) Int. Cl.: B62D 5/07

(54) **Druckmittelbetriebene Steuerungseinrichtung für eine Servolenkung und eine Kupplung sowie Verfahren zum Betreiben derselben**
Fluid-driven control apparatus for a power steering and a clutch as well as method for its operation
Dispositif de commande actionné par fluide pour une direction assistée et un embrayage ainsi que procédé pour son opération

(30) Priorität: 21.06.1995 DE 19522425
(43) Veröffentlichungstag der Anmeldung: 27.12.1996
(73) Patentinhaber: Volkswagen Aktiengesellschaft, 38436 Wolfsburg (DE)
(72) Erfinder: Rühmer, Heinz, Dipl.-Ing., 38302 Wolfenbüttel (DE); Wahnschaffe, Nikolaus, Dipl.-Ing., 38444 Wolfsburg (DE); Rüdiger, Reinhard, Dipl.-Ing., 31226 Peine (DE)

(56) Entgegenhaltungen:
- WO-A-96/15372
- DE-A- 4 316 339
- PATENT ABSTRACTS OF JAPAN vol. 015, no. 042 (M-1076), 31.Januar 1991 & JP-A-02 279462 (NISSAN MOTOR CO LTD), 15.November 1990,

## Beschreibung

Die Erfindung betrifft eine druckmittelbetriebene Steuerungseinrichtung für ein Kraftfahrzeug sowie ein Verfahren zur Steuerung derselben gemäß den Oberbegriffen der Patentansprüche 1 bzw. 8.
Aus der DE 35 20 884 A1 ist eine druckmittelbetriebene Steuerungsvorrichtung für ein Kraftfahrzeug bekannt, bei der eine Druckerzeugungseinrichtung sowie ein Steuerventil zur Betätigung einer Lenkkraftunterstützungsvorrichtung mittels Steuerdruckleitungen untereinander verbunden sind. Diese hydraulisch betreibbare Lenkkraftunterstützungseinheit besteht im wesentlichen aus einer Kolben-Zylinder-Anordnung, bei der eine Kolbenstange als Zahnstange ausgebildet ist, die mit einem Zahnkranz auf einer Lenkwelle der Lenkvorrichtung des Kraftfahrzeuges kämmt. Neben derartigen Lenkkraftunterstützungsvorrichtungen gibt es in Kraftfahrzeugen bekanntermaßen auch druckmittelbetriebene Kupplungsstellvorrichtungen.
Aus der DE-A-43 16 339, von der die Erfindung ausgeht, ist eine druckmittelbetriebene Steuerungseinrichtung für ein Kraftfahrzeug bekannt, mit deren Hilfe eine Lenkkraftunterstützungseinrichtung, nämlich eine Servo-Lenkung und eine Kupplungsbetätigungseinrichtung eines Kraftfahrzeuges betrieben wird. Um eine strömungstechnisch hydraulische Verbindung bzw. eine entsprechende Steuerung der beiden Verbraucher-Einheiten, nämlich der Lenkkraftunterstützungseinrichtung sowie der Kupplungsbetätigungseinrichtung zu gewährleisten, ist eine zwischen Druckerzeugungseinrichtung und Lenkkraftunterstützungseinrichtung bzw. zwischen Druckerzeugungseinrichtung und Kupplungsbetätigungseinrichtung zusätzliche Einrichtung zum Druckabbau und Druckaufbau eines Druckspeichers vorgesehen. Dieser Druckspeicher hält Druckmittel zur Betätigung der Kupplung bereit. Aus steuerungstechnischen Gründen weist diese Einrichtung ein Steuerventil auf, mit dessen Hilfe die Drukkerzeugungseinrichtung und die Lenkkraftunterstützungseinrichtung über Steuerleitungen miteinander verbindbar bzw. voneinander strömungstechnisch absperrbar sind. Dieses Steuerventil ist als elektromagnetisches 2-Wegeventil ausgeführt, so daß mit dessen Hilfe entweder die Lenkkraftunterstützungseinrichtung mit der Druckerzeugungseinrichtung strömungsverbunden ist oder nur der Druckspeicher mit der Druckerzeugungseinrichtung strömungsverbunden ist, um nämlich entsprechend aufgeladen zu werden, bzw. die Druckerzeugungseinrichtung mit der Kupplungsbetätigungseinrichtung strömungsverbunden ist.
Die bekannte druckmittelbetriebene Steuerungseinrichtung, von der die Erfindung ausgeht (DE-A-43 16 339), ist noch nicht optimal ausgebildet. Aufgrund der wahlweisen Schaltung des elektromagnetischen 2-Wegeventiles erfolgt für den Fall, wenn die Lenkkraftunterstützungseinrichtung entsprechend mit Druckmittel versorgt werden muß, nämlich dann, wenn die Druckerzeugungseinrichtung mit dem Druckspeicher verbunden ist, also die Druckerzeugungseinrichtung nicht mit der Lenkkraftunterstützungseinrichtung strömungsverbunden ist, zwar eine entsprechende Umschaltung des Steuerventiles, allerdings kann es hierdurch bedingt zu Druckschwankungen in den entsprechenden Steuerdruckleitungen kommen. Weder für Lenkkraftunterstützungseinrichtung, d.h. die hier angeordneten Sensoren, Messwertaufnehmer, noch für die Druckerzeugungseinrichtung, insbesondere die Hydraulikpumpe, sind solche Druckschwankungen vorteilhaft. Zwar sind im Stand der Technik auch Steuerventile bekannt, mit deren Hilfe derartige Druckschwankungen weitestgehend vermieden werden können, allerdings sind derartige Steuerventile sehr kostenintensiv und benötigen einen größeren steuerungstechnischen Aufwand, der wiederum die Kosten erhöht.
Der Erfindung liegt daher die Aufgabe zugrunde, eine druckmittelbetriebene Steuerungseinrichtung der in Rede stehenden Art derart auszugestalten und weiterzubilden, daß Druckschwankungen zwischen der Druckerzeugungseinrichtung und der Lenkkraftunterstützungseinrichtung unter Vermeidung hoher Kosten weitestgehend vermieden sind.

Die zuvor aufgezeigte Aufgabe wird nun mit den Merkmalen des kennzeichenden Teils des Patentanspruches 1 bzw. des Patentanspruches 8 gelöst. Durch die Ausgestaltung der druckmittelbetriebenen Steuerungseinrichtung werden die oben beschriebenen Nachteile vermieden. Aufgrund der parallelen Anordnung eines Drosselventils zum Steuerventil wird auch bei einer Absperrung der Steuerleitungen durch das Steuerventil eine Restdruckmittelversorgung zur Lenkkraftunterstützungsvorrichtung gewährleistet. Dadurch, daß nun aufgrund der zusätzlichen Anordnung eines Drosselventils auch bei der Absperrung der Steuerleitungen durch das Steuerventil eine Restdruckmittelversorgung für die Lenkkraftunterstützungsvorrichtung erfolgt, werden, auch wenn die Druckerzeugungseinrichtung über das Steuerventil nicht mit der Lenkkraftunterstützungseinrichtung verbunden ist, dann größere Druckschwankungen auf kostengünstige Art und Weise vermieden.

Zur Erläuterung der Erfindung ist der Beschreibung eine Zeichnung beigefügt, in der in zwei Ausführungsbeispielen die Erfindung konkretisiert ist. Im einzelnen zeigen
- Figur 1: eine Steuerungseinrichtung zur Betätigung einer Lenkkraftunterstützungseinrichtung und einer Kupplungsbetätigungseinrichtung, bei der ein Kupplungswegsensor getrennt von dem Kupplungsstellzylinder angeordnet ist, und
- Figur 2: eine Steuerungseinrichtung gemäß Figur 1, bei der der Kupplungswegsensor Bestandteil der Kupplungsbetätigungseinrichtung ist

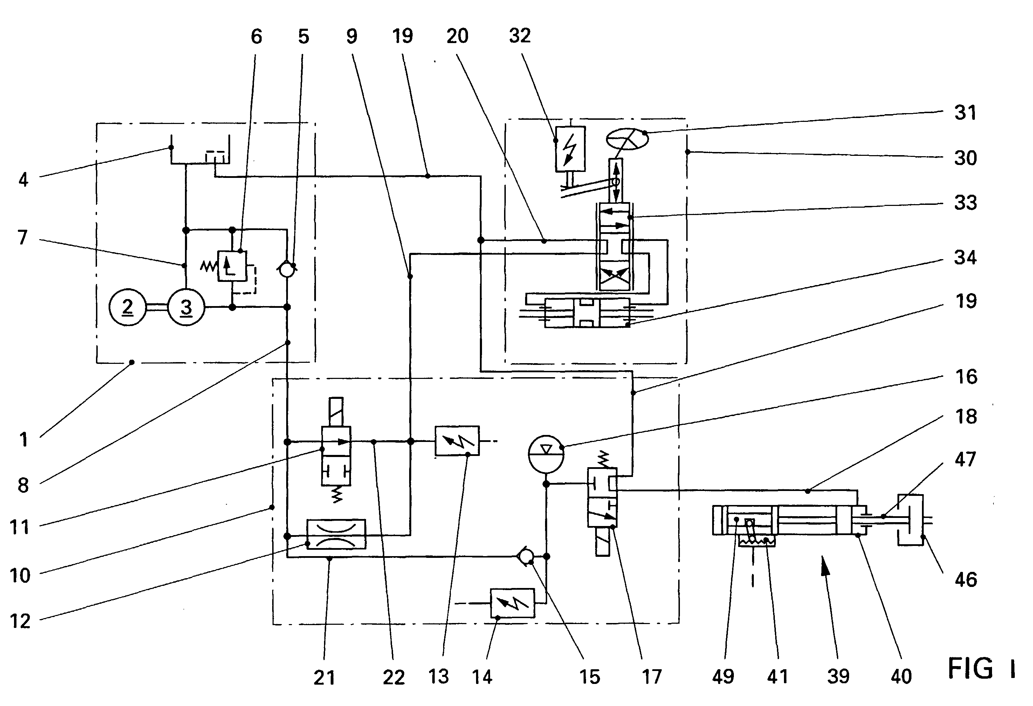

Demnach besteht die Steuerungseinrichtung gemäß Figur 1 aus vier verschiedenen Komponenten, die über Druckmittelleitungen untereinander verbunden sind. Dazu gehört eine Druckerzeugungseinrichtung 1, eine Speicherladeeinrichtung 10, eine Lenkkraftunterstützungseinrichtung 30 sowie eine Kupplungsbetätigungseinrichtung 39. Die Druckerzeugungseinrichtung 1 umfaßt im wesentlichen einen Antriebsmotor 2, eine Druckmittelpumpe 3, einen Druckmittelvorratsbehälter 4, ein Rückschlagventil 5, wenigstens ein Druckbegrenzungsventil 6 und Druckmittelleitungen 7, 8, 19.

Die Druckerzeugungseinrichtung 1 ist über die Druckmittelleitung 8 mit der Speicherladeeinrichtung 10 verbunden, in der sie ein Steuerventil 11, eine Drossel 12 sowie eine Druckmittelleitung 21 mit dem unter einem Hauptdruck stehenden Arbeitsmedium versorgt. Das Schaltventil 11 kann in diesem Ausführungsbeispiel die beiden Schaltpositionen "Durchgang offen" oder "Durchgang gesperrt" einnehmen, und verbindet im geöffneten Zustand die Druckmittelleitung 8 mit einer Druckmittelleitung 22, die ihrerseits eine Druckmittelleitung 9 speist, welches mit dem Eingang eines Lenkventiles 33 in der Lenkkraftunterstützungseinrichtung 30 verbunden ist.

In der Druckmittelleitung 9 oder 22 ist ein Drucksensor 13 angeordnet, der den Steuerdruck in diesen Druckmittelleitungen sensiert und an einen nicht dargestellten, die Schaltventile der Steuerungseinrichtung betätigenden Steuerungscomputer weiterleitet. In der Druckmittelleitung 9 ist außerdem parallel zum Schaltventil 11 das Drosselventil 12 angeordnet.

Die mit der Druckmittelleitung 8 verbundene Druckmittelleitung 21 führt über einen Rückschlagventil 15 zu einem Druckspeicher 16, dessen Druckniveau von einem Drucksensor 14 ermittelt und an den bereits erwähnten Steuerungscomputer weiterleitet. Mit dem Druckmittelbehälter 16 verbunden ist das letzte in der Speicherladevorrichtung 10 dargestellte Bauteil, nämlich das Kupplungssteuerventil 17, welches mit der Kupplungsbetätigungseinrichtung 39 über die Druckmittelleitung 18 und über die Druckmittelleitung 19 mit dem Druckmittelvorratsbehälter 4 in der Druckerzeugungseinrichtung 1 verbunden ist

Die Lenkkraftunterstützungseinrichtung 30 ist in Figur 1 ebenfalls nur schematisch dargestellt. Sie umfaßt im wesentlichen einen Lenkungsstellzylinder 34, der mit dem Lenkrad 31 des Fahrzeuges vorzugsweise über eine Zahnstangen-/Zahnkranzverbindung verbunden ist. Außerdem ist ein Lenkwinkelsensor 32 vorgesehen, der dem schon erwähnten und nicht dargestellten Steuerungscomputer Informationen über den Stellwinkel des Lenkrades 31 liefert. Die Kupplungsbetätigungseinrichtung 39 besteht im wesentlichen aus einer Kolben-Zylinder-Anordnung 40, mit der über eine Kupplungsstange oder Kupplungswelle 47 die Kupplung 46 betätigbar ist. In diesem Ausführungsbeispiel ist der Kolbeh 49 der Kolben-Zylinder-Anordnung mit einem Wegsensor 41 ausgestattet, dessen Sensorinfomationen über den Stellweg der Kupplungswelle oder Kupplungsstange 47 an den nicht dargestellten Steuerungscomputer auch hier über eine gestrichelt dargestellte Signalleitung weitergeleitet wird.

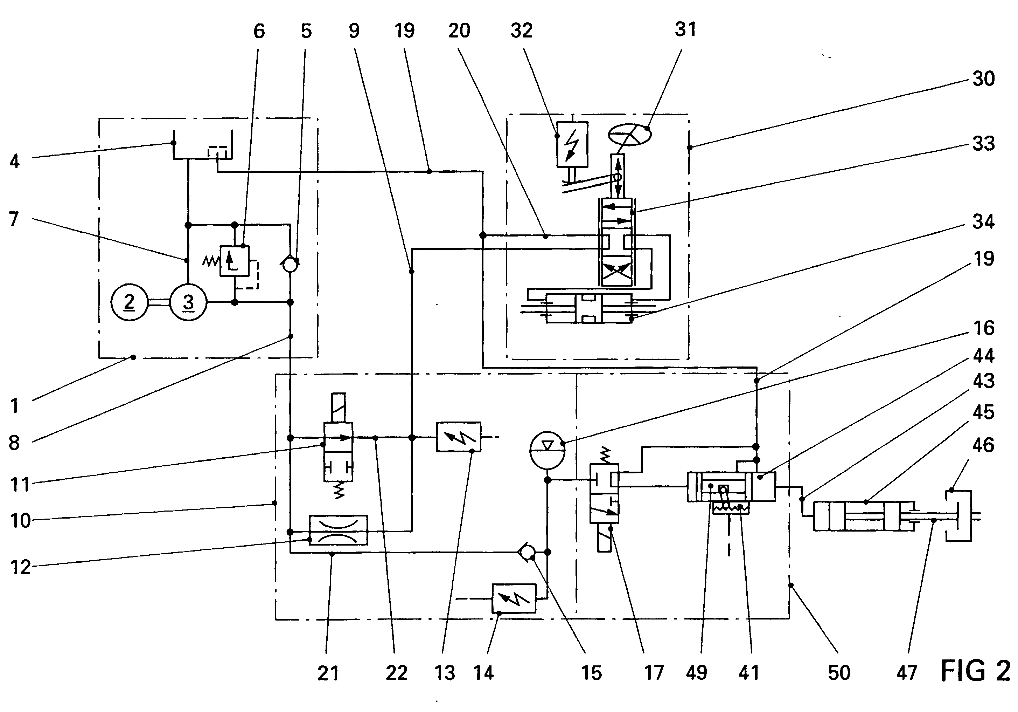

In dem Ausführungsbeispiel gemäß Figur 2 umfaßt die Speicherladevorrichtung 10 auch eine Kupplungsgebereinrichtung 50. In diese Kupplungsgebereinrichtung 50 sind das Kupplungsbetätigungsventil 17 und eine Kolben-Zylinder-Anordnung 44 zusammengefaßt, deren Kolben 49 mit einem Kupplungswegsensor 41 verbunden ist. Auch dieser Kupplungswegsensor 41 leitet die Informationen über den Kupplungsstellweg über die gestrichelt dargestellte Signalleitung an den nicht dargestellten Steuerungscomputer weiter.

Das Steuerventil 17 ist über die Kolben-Zylinder-Anordnung 44 über eine Druckmittelleitung 43 mit einer Kolben-Zylinder-Anordnung 45 verbunden, deren Kolben über eine Kolbenstange oder Kolbenwelle 44 die Kupplung 46 betätigt

Die Speicherladevorrichtung 10 gemäß Figur 1 oder zusammengefaßt mit der Kupplungsgebereinrichtung 50 können in einer bevorzugten Ausführungsform der Erfindung zu einer kompakten, mechanisch zusammengehörenden Einrichtung zusammengefaßt und mit einem gemeinsamen Gehäuse versehen werden, welche über die Druckmittelleitungen 8, 9, 19 mit der Druckerzeugungseinrichtung 1 und der Lenkkraftunterstützungseinrichtung 30 in Verbindung steht.

Zum besseren Verständnis der Betriebsweise der erfindungsgemäßen Steuerungseinrichtung werden im folgenden unterschiedliche Betriebszustände des Kraftfahrzeuges zusammen mit der dazugehörigen Betriebsweise der Steuerungseinrichtung dargestellt.

In der Druckerzeugungseinrichtung 1 wird von dem Motor 2 die Pumpe 3 bedarfsgerecht oder permanent derart angetrieben, daß in der Druckmittelleitung 8 ein ausreichend hoher Druck zum Betreiben der Steuerungseinrichtung bereitgestellt wird. Über die Leitungen 8, 21 und das Rückschlagventil 15 wird der Druckspeicher 16 derart unter Druck mit dem Arbeitsmedium gefüllt, so daß dieses zur bedarfsgerechten Betätigung der Kupplungsbetätigungsvorrichtung 39 genutzt werden kann. Außerdem wird über die Leitungen 8, 22, 9 die Lenkkraftunterstützungseinrichtung 30 mit dem unter Druck stehenden Arbeitsmedium versorgt. Beim Betrieb der Steuerungseinrichtung ist der Funktionszustand möglich, daß die Lenkkraftunterstützungseinrichtung 30 nicht betätigt, die Kupplung 46 nicht betätigt und der Druckspeicher 16 gefüllt ist oder unter seinen Nenndruck steht Bei geöffnetem Steuerventil 11 fließt bei einer derartigen Betriebsweise der Steuerungseinrichtung das Arbeitsmedium ohne Druckveränderung durch das Ventil 11 in die Druckmittelleitungen 22, 9, um anschließend das Steuerventil 33 sowie die Druckleitungen 20 und 19 drucklos in Richtung zum Druckmittelvorratsbehälter 4 zu durchströmen. Dabei wird der gefüllte Druckbehälter 16 mittels des Rückschlagventiles 15 gegen ein Entleeren abgesperrt.

Für den Fall, daß die Lenkkraftunterstützungseinrichtung 30 bei unter Nenndruck stehenden Druckspeicher 16 betätigt wird, ist das Steuerventil 11 in der Speicherladeeinrichtung 10 geöffnet, so daß das Arbeitsmittel dieses Ventil ungehindert passieren kann. Das Lenkventil 33 ist bei Betätigung der Lenkung 31 derart eingestellt, daß der Arbeitmitteldruck je nach Drosselquerschnitt des Lenkventils ansteigt und so den Stellzylinder 34 der Lenkung betätigt. Steigt der Druck in den Leitungen 9, 20, 8, 21 über den Fülldruck des Druckspeichers 16, wird dieser durch Öffnen des Rückschlagventiles 15 gleichzeitig befüllt. Für den Betriebsfall, daß bei nicht betätigter Lenkung der Druck im Druckspeicher unter einem Minimaldruck abfällt, wird das Steuerventil 17 geschlossen, so daß über die Leitung 22 kein Druckmittel zum Lenkventil 33 gelangen kann. Dadurch steigt der Druck des Arbeitsmittels in der Leitung 8 vor dem Steuerventil 17 an, so daß bei geöffnetem Rückschlagventil 15 der Druckspeicher 16 auffüllbar ist. Parallel dazu wird das Lenkventil 33 über das parallel zum Steuerventil 17 angeordnetes Drosselventil 12 und die Leitung 9 mit einem Teil des Arbeitsmittelstroms von der Pumpe 3 versorgt. Dieser Befüllvorgang des Druckspeichers 16 kann zeitgesteuert oder durch Messung des Fülldrucks mittels des Sensors 14 derart gesteuert werden, daß bei Erreichen eines vorgewählten Fülldruckes oder bei Ablauf der vorgewählten Befülldauer das Schaltventil 11 erneut auf Durchgang gestellt wird.

Für den Fall, daß während des Speicherfüllvorgangs, bei dem das Steuerventil 11 geschlossen sowie das Rückschlagventil 15 geöffnet ist und eine Minimaldruckmittelversorgung der Lenkkraftunterstützungsvorrichtung 30 über die Drossel 12 und Leitung 9 erfolgt und das Lenkventil 33 zur Verstellung des Lenkungsstellzylinders 34 betätigt wird, staut sich der dem Lenkventil 33 über die Drossel 12 zufließende Teildruckmittelstrom in der Druckmittelleitung 9, so daß der Drucksensor 13 eine Druckerhöhung feststellt und an den nicht dargestellten Steuerungscomputer weiterleitet. Dieser schaltet bei Überschreiten eines Grenzdruckes das Steuerventil 17 wieder auf Durchlaß, so daß der gesamte Arbeitsmittelstrom der Lenkkraftunterstützungseinrichtung 30 wieder zur Verfügung steht. Der Druckspeicher 16 wird nun auf den von der gedrosselten Lenkung erzeugten Druck aufgefüllt, sofern dessen Befülldruck unter dem des gerade vorliegenden Leitungsdruckes liegt.

Bei Inbetriebnahme der Steuerungseinrichtung nach einer längeren Phase der Nichtbenutzung und bei stillstehendem Fahrzeug wird die Steuerungseinrichtung derart betrieben, daß das Steuerventil 11 so lange geschlossen bleibt, bis der Drucksensor 14 einen ausreichend hohen Fülldruck im Druckspeicher 16 ermittelt oder bis eine vorbestimmte Füllzeitspanne abgelaufen ist. Auf diese Weise wird sichergestellt, daß im Druckspeicher 16 ausreichend Druck zur Betätigung der Kupplung 46 vorhanden ist. Im Fahrbetrieb wird gleichermaßen verfahren, wenn der Druck des Druckspeichers 16 unter einem Minimalwert abgefallen ist, jedoch wird auf die Begrenzung der maximalen Einschaltzeit verzichtet. Zudem kann vorgesehen sein, daß der Druckladevorgang während des Fahrbetriebes durch mehrmaliges kurzzeitiges Schließen und Öffnen des Steuerventiles 11 erfolgt.

Außerdem kann vorgesehen sein, daß bei nicht betätigter Lenkung 31 dann das Steuerventil 11 zur Ladung des Druckbehälters 16 geschlossen wird, wenn mit Hilfe eines Stellwegsensors an der Kupplungsbetätigungseinrichtung 39 oder der Kupplungsgebereinrichtung 50 auf einen Druckabbau im Druckbehälter 16 geschlossen wird, so daß damit auch die Druckinformation des Sensors 14 verifiziert werden kann.

Um einen sicheren Betrieb der Kupplungsbetätigungseinrichtung sicherzustellen, kann auch vorgesehen sein, daß eine Nachladung des Druckbehälters 16 durch Schließen des Steuerventils 11 dann ausgelöst wird, wenn der Drucksensor 14 einen Restdruck im Druckbehälter 16 ermittelt, der nur noch so groß ist, daß der Kupplungsstellkolben nur noch einen Kupplungsstellweg von vorbestimmter und im Steuerungcomputer abgelegter Länge ermöglicht. Grundsätzlich wird der Ladevorgang für den Druckspeicher 16 durch Öffnen des Schaltventiles 11 nur dann abgeschaltet, wenn der Lenkwinkelsensor 32 keinen Lenkvorgang signalisiert Andernfalls wird der Ladevorgang so lange fortgesetzt, bis der Lenkungsvorgang abgeschlossen ist Diese Maßnahme ist notwendig, um Einflüsse des Druckladevorgangs auf die Lenkung zu vermeiden.

Durch die Beschreibung des Aufbaus und der Funktionsweise der Steuerungseinrichtung wird deutlich, daß eine Einrichtung geschaffen wurde, bei der mit Hilfe nur einer Druckversorgungseinrichtung der Betrieb einer druckmittelbetätigten Kupplungsbetätigungseinrichtung sowie einer druckmittelbetriebenen Lenkkraftunterstützungseinrichtung sichergestellt wird.

## Patentansprüche

1. Druckmittelbetriebene Steuerungseinrichtung für ein Kraftfahrzeug, mit einer Druckerzeugungseinrichtung (1), die mit einer durch das Druckmittel betätigbaren Lenkkraftunterstützungseinrichtung (30) über Steuerdruckleitungen verbunden ist, wobei die Druckerzeugungseinrichtung (1) und die Lenkkraftunterstützungseinrichtung (30) über Steuerdruckleitungen (8 bzw. 9) mit einer Einrichtung (10) zum Druckaufbau und Druckabbau eines Druckspeichers (16) verbunden sind, welcher Druckmittel zur Betätigung einer Kupplung (46) bereit hält, und wobei die Einrichtung (10) mit einem Steuerventil (11), das mit den Steuerleitungen (8 bzw. 9) verbunden ist, zur Verbindung der Druckerzeugungseinrichtung (1) mit der Lenkkraftunterstützungseinrichtung (30) versehen ist, **dadurch gekennzeichnet, daß** die Einrichtung (10) zusätzlich ein mit den Steuerleitungen (8 bzw. 9) verbundenes Drosselventil (12) aufweist und daß das Drosselventil (12) parallel zum Steuerventil (11) angeordnet ist.

2. Steuerungseinrichtung nach Anspruch 1, **dadurch gekennzeichnet, daß** die Druckerzeugungseinrichtung (1) einen Antriebsmotor (2), eine Druckmittelpumpe (3), einen Druckmittelvorratsbehälter (4), ein Rückschlagventil (5), wenigstens ein Druckbegrenzungsventil (6) sowie Druckmittelleitungen (7, 8, 19) umfaßt

3. Steuerungseinrichtung nach Anspruch 1, **dadurch gekennzeichnet, daß** die Lenkkraftunterstützungseinrichtung (30) über einen Lenkungsstellzylinder (34) verfügt, der mit einem Lenkrad (31), einem Lenkwinkelsensor (32) und mit einem Lenkventil (33) zur Betätigung des Stellzylinders (34) verbunden ist.

4. Steuerungseinrichtung nach einem der Ansprüche 1 bis 3, **dadurch gekennzeichnet, daß** die Einrichtung (10) über das Steuerventil (11) mit dem Lenkventil (33) der Lenkkraftunterstützungseinrichtung (30) verbunden ist, wobei die Einrichtung (10)
mit einem Drucksensor (13) in der Verbindungsleitung (9, 22) zwischen dem Steuerventil (11) und dem Lenkventil (33),
mit einem Rückschlagventil (15) zwischen der von der Druckerzeugungseinrichtung (1) kommenden Steuerdruckleitung (8) und dem Druckspeicher (16),
mit einem Drucksensor (14) in der Druckleitung zwischen dem Rückschlagventil (15) und dem Behälter (16) sowie
mit einem Schaltventil (17) zwischen dem Druckspeicher (16), einer Druckmittelrücklaufleitung (19) zum Druckmittelvorratsbehälter (4) und
mit einer Betätigungseinrichtung (39) für die Kupplung (46) versehen ist

5. Steuerungseinrichtung nach Anspruch 4, **dadurch gekennzeichnet, daß** die Kupplungsbetätigungseinrichtung eine erste Kolben-Zylinder-Anordnung (44) aufweist, die mit dem Steuerventil (17) und einer zweiten Kolben-Zylinder-Einheit (45) über eine Steuerdruckleitung (43) verbunden ist, wobei letztere mit einem Eingangselement (47) der Kupplung (46) in Verbindung steht

6. Steuerungseinrichtung nach Anspruch 5, **dadurch gekennzeichnet, daß** der Kolben (49) der ersten Kolben-Zylinder-Anordnung (44) mit einem Wegsensor (41) verbunden ist.

7. Steuerungseinrichtung nach Anspruch 4, **dadurch gekennzeichnet, daß** die Kupplungsbetätigungseinrichtung (39) aus einer Kolben-Zylinder-Anordnung (40) besteht, deren Kolben (49) mit einem Eingangselement (47) der Kupplung (46) und mit einem Wegsensor (41) in Verbindung steht.

8. Verfahren zum Betreiben einer Steuerungseinrichtung für ein Kraftfahrzeug, insbesondere einer Steuerungseinrichtung nach einem oder mehreren der Ansprüche 1 bis 7, wobei die Steuerungseinrichtung mit Hilfe eines Druckmittels betrieben wird, wobei in einer Druckerzeugungseinrichtung (1) ein entsprechender Druck erzeugt wird und mit Hilfe des Druckmittels eine Lenkkraftunterstützungseinrichtung (30) betätigt wird, wobei innerhalb einer Einrichtung (10) zum Druckaufbau und zum Druckabbau ein Druckspeicher (16) vorgesehen ist, mit dessen Hilfe eine Kupplung (46) betätigt wird, und die Einrichtung (10) ein Steuerventil (11) aufweist, mit dessen Hilfe die Druckerzeugungseinrichtung (1) mit der Lenkkraftunterstützungseinrichtung (30) über Steuerleitungen (8 bzw. 9) verbunden ist,
**dadurch gekennzeichnet, daß** bei einer Absperrung der Steuerleitungen (8 bzw. 9) durch das Steuerventil (11) eine Restdruckmittelversorgung zur Lenkkraftunterstützungsvorrichtung (30) über ein zum Steuerventil (11) parallel angeordnetes Drosselventil (12) erfolgt.

9. Verfahren zum Betreiben einer Steuerungseinrichtung nach Anspruch 8,
**dadurch gekennzeichnet**,
daß bei nicht betätigter Lenkung (31), nicht betätigter Kupplung (46) und gefülltem Druckspeicher (16) das Steuerventil (11) in der Speicherladevorrichtung (10) geöffnet ist,
daß das Lenkventil (33) in der Lenkkraftunterstützungseinrichtung (30) den Druckmittelstrom zum Druckmittelvorratsbehälter (4) ohne weitere Steuerungsfunktion umlenkt, und
daß der Druckspeicher (16) mittels des Rückschlagventiles (15) und dem Steuerventil (17) gesperrt ist.

10. Verfahren nach einem der Ansprüche 8 oder 9,
**dadurch gekennzeichnet**,
daß bei Betätigung der Lenkung (31) und gefülltem Druckspeicher (16) das Steuerventil (11) in der Speicherladevorrichtung geöffnet ist,
daß mittels des Lenkventils (33) zur Erzeugung einer Lenkkraft der Lenkungsstellzylinder (34) aktiviert wird, und
daß bei einem Anstieg des Steuerdruckes über dem Fülldruck des Speichers (16) dieser durch Öffnen des Rückschlagventils (15) gleichzeitig befüllt wird.

11. Verfahren nach einem der Ansprüche 8 bis 10,
**dadurch gekennzeichnet**,
daß bei nicht betätigter Lenkung (31) und einem von dem Drucksensor (14) ermittelten Absinken des Druckes des Druckspeichers (16) unter einen Minimaldruck das Steuerventil (11) in der Speicherladeeinrichtung (10) die Druckleitung (22) zur Lenkkraftunterstützungseinrichtung (30) absperrt, und
daß über eine mit der Druckmittelleitung (8) verbundene Druckmittelleitung (21) bei ansteigendem Druck der Druckbehälter (16) befüllt wird.

12. Verfahren nach Anspruch 10, **dadurch gekennzeichnet, daß** der Befüllungsvorgang zeitgesteuert oder durch Messung des Fülldruckes mittels des Sensors (14) derart gesteuert wird, daß beim Erreichen eines vorgewählten Fülldruckes oder beim Ablauf der vorgewählten Befülldauer das Schaltventil (11) auf Durchgang gestellt wird.

13. Verfahren nach den Ansprüchen 10 und 11, **dadurch gekennzeichnet**,
daß bei Betätigung der Lenkung (31) während des Befüllvorganges des Druckbehälters (16), bei dem das Steuerventil (11) geschlossen sowie das Rückschlagventil (15) geöffnet ist,
und bei dem eine Minimaldruckmittelversorgung der Lenkkraftunterstützungseinrichtung (30) über die Drossel (12) und die Leitung (9) erfolgt,
daß das Lenkventil (33) zur Nutzung des Lenkungsstellzylinders (34) betätigt wird,
daß mittels des Drucksensors (13) der Druck des Druckmittels in der Leitung (9) ermittelt wird, und
daß bei einem durch die Aktivierung des Lenkungsstellzylinders (34) erfolgenden Druckanstieg das Steuerventil (17) geöffnet wird.

14. Verfahren nach einem der Ansprüche 8 bis 12, **dadurch gekennzeichnet, daß** bei einer Inbetriebnahme der Steuerungseinrichtung nach einer längeren Phase der Nichtbenutzung und bei stillstehendem Fahrzeug das Steuerventil (11) so lange geschlossen bleibt, bis der Drucksensor (14) einen ausreichend hohen Fülldruck im Druckspeicher (16) ermittelt hat oder bis eine vorbestimmte Zeitdauer abgelaufen ist.

15. Verfahren nach einem der Ansprüche 8 bis 11, **dadurch gekennzeichnet, daß** der Druckladevorgang für den Druckspeicher (16) durch kurzzeitiges Schließen und Öffnen des Steuerventils (11) erfolgt.

16. Verfahren nach einem der Ansprüche 8 bis 15, **dadurch gekennzeichnet, daß** bei nicht betätigter Lenkung (31) dann das Steuerventil (11) zur Ladung des Druckbehälters (16) geschlossen wird, wenn mit Hilfe eines Stellwegsensors (41) an der Kupplung (46) oder am Kupplungsstellkolben (49) ein Druckabbau im Druckbehälter (16) festgestellt wird.

17. Verfahren nach einem der Ansprüche 8 bis 16, **dadurch gekennzeichnet, daß** der Drucksensor (14) dann eine Nachladung des Druckbehälters (16) durch Schließen des Steuerventils (11) auslöst, wenn der Restdruck im Behälter (16) nur noch so groß ist, daß mit Hilfe des Kupplungsstellkolbens (49) nur noch ein Kupplungsstellweg vorbestimmter Länge realisierbar ist

18. Verfahren nach einem der Ansprüche 8 bis 17, **dadurch gekennzeichnet, daß** das Steuerventil (11) nur dann zur Beendigung des Speicherladevorgangs geöffnet wird, wenn der Sensor (32) keine Lenkbetätigung sensiert.

## Claims

1. Pressure-medium-operated control device for a motor vehicle, with a pressure-generating device (1) which is connected via control-pressure lines to a steering-force assistance device (30) actuable by means of the pressure medium, the pressure-generating device (1) and the steering-force assistance device (30) being connected via control-pressure lines (8 and 9) to a device (10) for building up the pressure and reducing the pressure of a pressure accumulator (16) which supplies pressure medium for actuating a clutch (46), and the device (10) being provided with a control valve (11), connected to the control lines (8 and 9), for connecting the pressure-generating device (1) to the steering-force assistance device (30), **characterized in that** the device (10) additionally has a throttle valve (12) connected to the control lines (8 and 9), and in that the throttle valve (12) is arranged parallel to the control valve (11).

2. Control device according to Claim 1, **characterized in that** the pressure-generating device (1) comprises a drive motor (2), a pressure-medium pump (3), a pressure-medium reservoir (4), a non-return valve (5), at least one pressure-limiting valve (6) and pressure-medium lines (7, 8, 19).

3. Control device- according to Claim 1, **characterized in that** the steering-force assistance device (30) has a steering regulation cylinder (34) which is connected to a steering wheel (31) and a steering-angle sensor (32) and to a steering valve (33) for actuating the regulation cylinder (34).

4. Control device according to one of Claims 1 to 3, **characterized in that** the device (10) is connected via the control valve (11) to the steering valve (33) of the steering-force assistance device (30), the device (10) being provided with a pressure sensor (13) in the connecting line (9, 22) between the control valve (11) and the steering valve (33), with a non-return valve (15) between the control-pressure line (8) coming from the pressure-generating device (1) and the pressure accumulator (16), with a pressure sensor (14) in the pressure line between the non-return valve (15) and the pressure accumulator (16), and also with a switching valve (17) between the pressure accumulator (16) and a pressure-medium return line (19) to the pressure-medium reservoir (4), and with an actuating device (39) for the clutch (46).

5. Control device according to Claim 4, **characterized in that** the clutch-actuating device has a first piston/cylinder arrangement (44) which is connected to the control valve (17) and a second piston/cylinder unit (45) via a control-pressure line (43), the latter being connected to an inlet element (47) of the clutch (46).

6. Control device according to Claim 5, **characterized in that** the piston (49) of the first piston/cylinder arrangement (44) is connected to a displacement sensor (41).

7. Control device according to Claim 4, **characterized in that** the clutch-actuating device (39) consists of a piston/cylinder arrangement (40), the piston (49) of which is connected to an inlet element (47) of the clutch (46) and to a displacement sensor (41).

8. Method for operating a control device for a motor vehicle, in particular a control device according to one or more of Claims 1 to 7, the control device being operated with the aid of a pressure medium, an appropriate pressure being generated in a pressure-generating device (1) and a steering-force assistance device (30) being actuated with the aid of the pressure medium, there being provided within a device (10) for the build-up of pressure and for the reduction of pressure a pressure accumulator (16), with the aid of which a clutch (46) is actuated, and the device (10) having a control valve (11), with the aid of which the pressure-generating device (1) is connected to the steering-force assistance device (10) via control lines (8 and 9), **characterized in that**, when the control lines (8 and 9) are shut off by means of the control valve (11), a supply of residual pressure medium to the steering-force assistance device (30) takes place via a throttle valve (12) arranged parallel to the control valve (11).

9. Method for operating a control device according to Claim 8, **characterized in that**, with the steering (31) not actuated, the clutch (46) not actuated and the pressure accumulator (16) full, the control valve (11) in the accumulator-charging device (10) is open, in that the steering valve (33) in the steering-force assistance device (30) deflects the pressure-medium stream to the pressure-medium reservoir (4) without a further control function, and in that the pressure accumulator (16) is shut off by means of the non-return valve (15) and the control valve (17).

10. Method according to one of Claims 8 or 9, **characterized in that**, with the steering (31) actuated and the pressure accumulator (16) full, the control valve (11) in the accumulator-charging device is opened, in that the steering regulation cylinder (34) is activated by means of the steering valve (33) in order to generate a steering force, and in that, in the event of a rise in the control pressure of the filling pressure of the accumulator (16), the latter is simultaneously filled as a result of the opening of the non-return valve (15).

11. Method according to one of Claims 8 to 10, **characterized in that**, with the steering (31) not actuated and with a fall, determined by the pressure sensor (14), of the pressure of the pressure accumulator (16) below a minimum pressure, the control valve (11) in the accumulator-charging device (10) shuts off the pressure line (22) to the steering-force assistance device (30), and in that, with a rise in pressure, the pressure accumulator (16) is filled via a pressure-medium line (21) connected to the pressure-medium line (8).

12. Method according to Claim 10, **characterized in that** the filling operation is controlled by time control or by the measurement of the filling pressure by means of the sensor (14), in such a way that, when a preselected filling pressure is reached or when the preselected filling duration elapses, the switching valve (11) is set to passage.

13. Method according to Claims 10 and 11, **characterized in that**, when the steering (31) is actuated during the operation of filling the pressure accumulator (16), during which the control valve (11) is closed and the non-return valve (15) is opened and during which a minimum supply of pressure medium to the steering-force assistance device (30) takes place via the throttle (12) and the line (9), in that the steering valve (33) is actuated in order to utilize the steering regulation cylinder (34), in that the pressure of the pressure medium in the line (9) is determined by means of the pressure sensor (13), and in that, in the event of pressure rise taking place as a result of the activation of the steering regulation cylinder (34), the control valve (17) is opened.

14. Method according to one of Claims 8 to 12, **characterized in that**, when the control device is put into operation after a lengthy phase of non-use and with the vehicle at a standstill, the control valve (11) remains closed until the pressure sensor (14) has determined a sufficiently high filling pressure in the pressure accumulator (16) or until a predetermined duration has elapsed.

15. Method according to one of Claims 8 to 11, **characterized in that** the pressure-charging operation for the pressure accumulator (16) takes place by means of the brief closing and opening of the control valve (11).

16. Method according to one of Claims 8 to 15, **characterized in that**, with the steering (31) not actuated, the control valve (11) for charging the pressure accumulator (16) is closed when a reduction of pressure in the pressure accumulator (16) is detected with the aid of a regulating-displacement sensor (41) at the clutch (46) or at the clutch regulating piston (49).

17. Method according to one of Claims 8 to 16, **characterized in that** the pressure sensor (14) triggers a recharging of the pressure accumulator (16) as a result of the closing of the control valve (11), when the residual pressure in the accumulator (16) is only sufficient for a clutch regulating displacement of predetermined length to be executed with the aid of the clutch regulating piston (49).

18. Method according to one of Claims 8 to 17, **characterized in that** the control valve (11) is opened in order to terminate the accumulator-charging operation only when the sensor (32) does not sense any steering actuation.

## Revendications

1. Dispositif de commande actionné par fluide de pression pour un véhicule à moteur, comprenant un dispositif générateur de pression (1) qui est connecté par des conduites de pression de commande à un dispositif d'assistance à la direction (30) actionnable par le fluide de pression, le dispositif générateur de pression (1) et le dispositif d'assistance à la direction (30) étant connectés par des conduites de pression de commande (8, respectivement 9) à un dispositif (10) d'accumulation de pression et de réduction de pression d'un accumulateur de pression (16), lequel tient à disposition du fluide de pression pour l'actionnement d'un embrayage (46), et le dispositif (10) étant pourvu d'une soupape de commande (11) qui est connectée aux conduites de commande (8, respectivement 9) pour connecter le dispositif générateur de pression (1) au dispositif d'assistance à la direction (30), **caractérisé en ce que** le dispositif (10) présente en outre une soupape d'étranglement (12) connectée aux conduites de commande (8, respectivement 9) et en ce que la soupape d'étranglement (12) est disposée parallèlement à la soupape de commande (11).

2. Dispositif de commande selon la revendication 1, **caractérisé en ce que** le dispositif générateur de pression (1) comprend un moteur d'entraînement (2), une pompe de fluide de pression (3), un réservoir de fluide de pression (4), une soupape anti-retour (5), au moins une soupape de limitation de pression (6) ainsi que des conduites de fluide de pression (7, 8, 19).

3. Dispositif de commande selon la revendication 1, **caractérisé en ce que** le dispositif d'assistance à la direction (30) dispose d'un cylindre de réglage de la direction (34), qui est connecté à un volant de direction (31), un détecteur d'angle de direction (32) et une soupape de direction (33) pour l'actionnement du cylindre de réglage (34).

4. Dispositif de commande selon l'une quelconque des revendications 1 à 3, **caractérisé en ce que** le dispositif (10) est connecté par le biais de la soupape de commande (11) à la soupape de direction (33) du dispositif d'assistance à la direction (30), le dispositif (10) étant pourvu d'un détecteur de pression (13) dans la conduite de raccordement (9, 22) entre la soupape de commande (11) et la soupape de direction (33), d'une soupape de non-retour (15) entre la conduite de pression de commande (8) provenant du dispositif générateur de pression (1) et l'accumulateur de pression (16), d'un capteur de pression (14) dans la conduite de pression entre la soupape de non-retour (15) et le réservoir (16) ainsi que d'une soupape de commutation (17) entre l'accumulateur de pression (16) et une conduite de retour du fluide de pression (19) allant au réservoir de fluide de pression (4), et d'un dispositif d'actionnement (39) pour l'embrayage (46).

5. Dispositif de commande selon la revendication 4, **caractérisé en ce que** le dispositif d'actionnement d'embrayage présente un premier agencement cylindre-piston (44) qui est connecté à la soupape de commande (17) et à une deuxième unité cylindre-piston (45) par l'intermédiaire d'une conduite de pression de commande (43), cette dernière étant connectée à un élément d'entrée (47) de l'embrayage (46).

6. Dispositif de commande selon la revendication 5, **caractérisé en ce que** le piston (49) du premier agencement cylindre-piston (44) est connecté à un détecteur de distance (41).

7. Dispositif de commande selon la revendication 4, **caractérisé en ce que** le dispositif d'actionnement d'embrayage (39) se compose d'un agencement cylindre-piston (40) dont le piston (49) est connecté à un élément d'entrée (47) de l'embrayage (46) et à un capteur de distance (41).

8. Procédé pour l'opération d'un dispositif de commande pour un véhicule à moteur, en particulier un dispositif de commande selon l'une ou plusieurs des revendications 1 à 7, dans lequel le dispositif de commande est actionné au moyen d'un fluide de pression, une pression correspondante étant produite dans un dispositif générateur de pression (1) et un dispositif d'assistance à la direction (30) étant actionné à l'aide du fluide de pression, un accumulateur de pression (16) étant disposé à l'intérieur d'un dispositif (10) pour l'accumulation de pression et pour la réduction de pression, à l'aide duquel accumulateur un embrayage (46) est actionné, et le dispositif (10) présentant une soupape de commande (11), au moyen de laquelle le dispositif générateur de pression (1) est connecté au dispositif d'assistance à la direction (30) par le biais de conduites de commande (8, respectivement 9), **caractérisé en ce qu**'en cas d'obturation des conduites de commande (8, respectivement 9) par la soupape de commande (11), il se produit une alimentation résiduelle en fluide de pression au dispositif d'assistance à la direction (30) par l'intermédiaire d'une soupape d'étranglement (12) disposée parallèlement à la soupape de commande (11).

9. Procédé pour l'opération d'un dispositif de commande selon la revendication 8, **caractérisé en ce que**, dans le cas où la direction (31) n'est pas actionnée, où l'embrayage (46) n'est pas actionné et l'accumulateur de pression est chargé (16), la soupape de commande (11) est ouverte dans le dispositif de charge de l'accumulateur (10), en ce que la soupape de direction (33) dans le dispositif d'assistance à la direction (30) dévie le courant de fluide de pression sans autre fonction de commande vers le réservoir de fluide de pression (4), et en ce que l'accumulateur de pression (16) est bloqué au moyen de la soupape de non-retour (15) et de la soupape de commande (17).

10. Procédé selon l'une quelconque des revendications 8 ou 9, **caractérisé en ce que**, dans le cas où la direction (31) est actionnée et l'accumulateur de pression (16) est chargé, la soupape de commande (11) est ouverte dans le dispositif de charge de l'accumulateur, en ce que le cylindre de réglage de la direction (34) est activé au moyen de la soupape de direction (33) pour la génération d'une force de direction, et en ce qu'en cas d'augmentation de la pression de commande au-delà de la pression de charge de l'accumulateur (16), celui-ci est chargé simultanément par l'ouverture de la soupape de non-retour (15).

11. Procédé selon l'une quelconque des revendications 8 à 10, **caractérisé en ce que**, dans le cas où la direction (31) n'est pas actionnée et la pression de l'accumulateur de pression (16) détectée par le détecteur de pression (14) descend en dessous d'une pression minimale, la soupape de commande (11) dans le dispositif de charge de l'accumulateur (10) bloque la conduite de pression (22) vers le dispositif d'assistance à la direction (30), et en ce que le réservoir de pression (16) est rempli par le biais d'une conduite de fluide de pression (21) connectée à la conduite de fluide de pression (8) en cas de pression croissante.

12. Procédé selon la revendication 10, **caractérisé en ce que** le processus de remplissage est commandé dans le temps ou par une mesure de la pression de remplissage au moyen du détecteur (14), de telle sorte qu'à l'obtention d'une pression de remplissage préétablie ou à la fin de la durée de remplissage préétablie, la soupape de commutation (11) est réglée sur le passage.

13. Procédé selon les revendications 10 et 11, **caractérisé en ce que**, lors de l'actionnement de la direction (31) pendant le processus de remplissage du réservoir de pression (16) dans lequel la soupape de commande (11) est fermée et la soupape de non-retour (15) est ouverte, et dans lequel il se produit une alimentation minimale en fluide de pression du dispositif d'assistance à la direction (30) par la soupape d'étranglement (12) et la conduite (9), la soupape de direction (33) est actionnée en vue d'utiliser le cylindre de réglage de la direction (34), en ce que la pression du fluide de pression dans la conduite (9) est détectée au moyen du détecteur de pression (13), et en ce que la soupape de commande (17) est ouverte en cas d'une augmentation de la pression résultant de l'activation du cylindre de réglage de la direction (34).

14. Procédé selon l'une quelconque des revendications 8 à 12, **caractérisé en ce que**, en cas de mise en route du dispositif de commande après une phase de non utilisation relativement longue et dans le cas où le véhicule est à l'arrêt, la soupape de commande (11) reste fermée tant que le capteur de pression (14) n'a pas détecté une pression de remplissage suffisamment élevée dans l'accumulateur de pression (16) ou tant qu'une durée prédéterminée ne s'est pas écoulée.

15. Procédé selon l'une quelconque des revendications 8 à 11, **caractérisé en ce que** le processus de charge de pression pour l'accumulateur de pression (16) est effectué par une brève fermeture et ouverture de la soupape de commande (11).

16. Procédé selon l'une quelconque des revendications 8 à 15, **caractérisé en ce que**, dans le cas où la direction n'est pas actionnée (31), la soupape de commande (11) pour la charge du réservoir de pression (16) est fermée, lorsqu'une réduction de pression dans le réservoir de pression (16) est établie à l'aide d'un détecteur de distance de réglage (41) au niveau de l'embrayage (46) ou du piston de réglage de l'embrayage (49).

17. Procédé selon l'une quelconque des revendications 8 à 16, **caractérisé en ce que** le détecteur de pression (14) déclenche alors une charge ultérieure du réservoir de pression (16) par fermeture de la soupape de commande (11), lorsque la pression résiduelle dans le réservoir (16) n'est présente que dans une quantité telle que l'on peut seulement réaliser une distance de réglage de l'embrayage d'une longueur prédéterminée à l'aide du piston de réglage de l'embrayage (49).

18. Procédé selon l'une quelconque des revendications 8 à 17, **caractérisé en ce que** la soupape de commande (11) n'est ouverte à la fin du processus de charge de l'accumulateur que si le détecteur (32) ne détecte pas d'actionnement de la direction.
